# DEMANDE DE BREVET EUROPEEN

(11) **EP 3 756 514 A1**
(43) Date de publication de la demande: **30.12.2020**
(21) Numéro de dépôt: 20180956.3
(22) Date de dépôt: 18.06.2020
(51) Int. Cl.: A47J 27/08, A47J 27/00

(54) **APPAREIL DE CUISSON ÉLECTRIQUE POURVU D'UN DISPOSITIF DE CHAUFFAGE DÉMONTABLE**

(30) Priorité: 27.06.2019 FR 1907038
(71) Demandeur: SEB S.A., 69130 Ecully (FR)
(72) Inventeur: DOS SANTOS, Quentin, 69009 LYON (FR); DOAT, Géraldine, 69300 CALUIRE ET CUIRE (FR)
(74) Mandataire: SEB Développement

(57) **Abrégé**

La présente invention a pour objet un appareil de cuisson électrique (2) comprenant un boîtier (3) comportant une cuve de cuisson (4) configurée pour recevoir des aliments à cuire ; un couvercle (5) monté pivotant sur le boîtier (3) entre une position ouverte dans laquelle le couvercle (5) libère un accès à la cuve de cuisson (4) et une position fermée dans laquelle le couvercle (5) empêche l'accès à la cuve de cuisson (4) ; et un dispositif de chauffage (7) qui est monté de façon amovible sur une surface intérieure du couvercle (5), le dispositif de chauffage (7) comportant un organe de chauffage (14) configuré pour être situé en regard des aliments à cuire reçus dans la cuve de cuisson (4) et pour chauffer lesdits aliments à cuire lorsque le couvercle (5) occupe la position fermée.

## Description

### Domaine technique

La présente invention concerne de manière générale un appareil de cuisson électrique pour cuire des aliments avec ou sans pression, tel qu'un autocuiseur électrique ou un multi-cuiseur électrique avec ou sans pression.

### Etat de la technique

Il est connu des documents CN109463999A ou WO2012056175A2 un appareil de cuisson électrique comprenant de façon connue :
- un boîtier comportant une cuve de cuisson configurée pour recevoir des aliments à cuire,
- un couvercle monté pivotant sur le boîtier entre une position ouverte dans laquelle le couvercle libère un accès à la cuve de cuisson et une position fermée dans laquelle le couvercle empêche l'accès à la cuve de cuisson, et
- un élément de chauffage qui est disposé dans le boîtier et qui est configuré pour chauffer la cuve de cuisson par conduction et convection, l'élément de chauffage étant avantageusement formé par un élément résistif chauffant s'étendant autour d'une paroi latérale de la cuve de cuisson.

Un tel agencement de l'élément de chauffage permet de chauffer la paroi latérale de la cuve de cuisson et donc d'assurer une cuisson des aliments reçus dans la cuve de cuisson. Une telle cuisson peut être réalisée sous pression ou sans pression selon que l'appareil de cuisson électrique soit un autocuiseur électrique ou un multi-cuiseur électrique sans pression.

Toutefois, un tel appareil de cuisson électrique ne permet notamment pas d'assurer une cuisson au gril des aliments reçus dans la cuve de cuisson.

Il est également connu de ces documents un dispositif de chauffage monté sur une surface intérieure du couvercle, le dispositif de chauffage comportant un organe de chauffage configuré pour être situé en regard des aliments à cuire reçus dans la cuve de cuisson et pour chauffer lesdits aliments à cuire lorsque le couvercle occupe la position fermée.

Cependant, ce dispositif de chauffage ne peut pas être facilement nettoyé.

### Résumé de l'invention

La présente invention vise à remédier à tout ou partie de ces inconvénients.

Le problème technique à la base de l'invention consiste notamment à fournir un appareil de cuisson électrique qui soit de structure simple et qui soit facilement nettoyable, tout en permettant une cuisson au gril des aliments reçus dans une cuve de cuisson de l'appareil de cuisson électrique.

A cet effet, la présente invention concerne un appareil de cuisson électrique comprenant :
- un boîtier comportant une cuve de cuisson configurée pour recevoir des aliments à cuire, et
- un couvercle monté pivotant sur le boîtier entre une position ouverte dans laquelle le couvercle libère un accès à la cuve de cuisson et une position fermée dans laquelle le couvercle empêche l'accès à la cuve de cuisson, l'appareil de cuisson électrique comprenant en outre un dispositif de chauffage qui est monté sur une surface intérieure du couvercle, le dispositif de chauffage comportant un organe de chauffage configuré pour être situé en regard des aliments à cuire reçus dans la cuve de cuisson et pour chauffer lesdits aliments à cuire lorsque le couvercle occupe la position fermée,
ledit appareil de cuisson électrique étant caractérisé en ce que le dispositif de chauffage est monté de façon amovible sur la surface intérieure du couvercle.

Un tel agencement du dispositif de chauffage permet de cuire les aliments reçus dans la cuve de cuisson selon une cuisson au gril, et donc de pouvoir cuire ces aliments rapidement et par exemple sans ajout de matière grasse ou avec très peu de matière grasse ajoutée. Une cuisson au gril permet également de « dorer » les aliments, ce qui n'est pas possible avec des appareils de cuisson électriques de type autocuiseurs électriques.

De plus, le fait que le dispositif de chauffage soit démontable du couvercle permet de faciliter son nettoyage, et notamment de le laver au lave-vaisselle.

Ainsi, l'appareil de cuisson électrique selon la présente invention est facilement nettoyable, tout en permettant une cuisson au gril.

En outre, si l'appareil de cuisson électrique selon la présente invention est également pourvu d'un élément de chauffage disposé dans le boîtier, il est alors possible, au choix de l'utilisateur, de chauffer les aliments reçus dans la cuve de cuisson selon une cuisson par conduction (c'est-à-dire via un chauffage de la paroi latérale de la cuve de cuisson) ou selon une cuisson au gril.

En complément, si l'appareil de cuisson électrique selon la présente invention est pourvu d'un élément de chauffage disposé dans le boîtier, les aliments reçus dans la cuve de cuisson peuvent également être cuits lentement via l'élément de chauffage, et en fin de cuisson être dorés via l'organe de chauffage.

L'appareil de cuisson électrique peut en outre présenter une ou plusieurs des caractéristiques suivantes, prises seules ou en combinaison.

Selon un mode de réalisation de l'invention, le dispositif de chauffage comporte un élément de fermeture configuré pour fermer au moins partiellement une ouverture d'accès de la cuve de cuisson lorsque le couvercle occupe la position fermée, l'organe de chauffage étant fixé à l'élément de fermeture.

Selon un mode de réalisation de l'invention, l'élément de fermeture comporte une première surface configurée pour être orientée vers le couvercle, et une deuxième surface configurée pour être orientée vers la cuve de cuisson lorsque le couvercle occupe la position fermée, l'organe de chauffage s'étendant sur la deuxième surface de l'élément de fermeture.

Selon un mode de réalisation de l'invention, l'élément de fermeture et la cuve de cuisson délimitent une enceinte de cuisson lorsque le couvercle est dans la position fermée, l'organe de chauffage étant configuré pour être disposé dans l'enceinte de cuisson.

Selon un mode de réalisation de l'invention, l'élément de fermeture est configuré pour fermer de manière étanche l'ouverture d'accès de la cuve de cuisson lorsque le couvercle occupe la position fermée.

Selon un mode de réalisation de l'invention, le dispositif de chauffage comporte un élément d'étanchéité annulaire qui est fixé à l'élément de fermeture et qui est configuré pour coopérer de manière étanche avec l'ouverture d'accès de la cuve de cuisson.

Selon un mode de réalisation de l'invention, l'organe de chauffage est un élément résistif chauffant.

Selon un mode de réalisation de l'invention, l'appareil de cuisson électrique comporte un mécanisme de verrouillage configuré pour verrouiller le dispositif de chauffage sur le couvercle, et plus particulièrement pour verrouiller l'élément de fermeture sur le couvercle.

Selon un mode de réalisation de l'invention, le mécanisme de verrouillage comporte un élément de verrouillage, tel qu'un doigt de verrouillage, prévu sur le couvercle et monté mobile entre une position de verrouillage dans laquelle l'élément de verrouillage coopère avec le dispositif de chauffage de manière à verrouiller le dispositif de chauffage sur le couvercle, et une position de libération dans laquelle l'élément de verrouillage libère le dispositif de chauffage et autorise un démontage du dispositif de chauffage.

Selon un mode de réalisation de l'invention, l'élément de verrouillage est monté pivotant autour d'un axe de pivotement.

Selon un mode de réalisation de l'invention, le dispositif de chauffage comporte un organe de verrouillage configuré pour coopérer avec l'élément de verrouillage prévu sur le couvercle lorsque l'élément de verrouillage est dans la position de verrouillage. Avantageusement, l'organe de verrouillage est disposé sur l'élément de fermeture, et par exemple sur la première surface de l'élément de fermeture.

Selon un mode de réalisation de l'invention, l'organe de verrouillage comporte une ouverture de verrouillage et l'élément de verrouillage est configuré pour s'insérer au moins partiellement dans l'ouverture de verrouillage lorsque l'élément de verrouillage est dans la position de verrouillage.

Selon un mode de réalisation de l'invention, l'appareil de cuisson électrique comporte un organe de sollicitation configuré pour solliciter l'élément de verrouillage vers la position de verrouillage.

Selon un mode de réalisation de l'invention, l'appareil de cuisson électrique comporte un organe d'actionnement configuré pour déplacer l'élément de verrouillage de la position de verrouillage vers la position de libération.

Selon un mode de réalisation de l'invention, l'organe d'actionnement est monté mobile sur le couvercle entre une position de repos dans laquelle l'élément de verrouillage est dans la position de verrouillage et une position de déverrouillage dans laquelle l'élément de verrouillage est dans la position de libération, l'organe d'actionnement étant configuré de telle sorte qu'un déplacement de l'organe d'actionnement de la position de repos vers la position de déverrouillage entraîne un déplacement de l'élément de verrouillage de la position de verrouillage vers la position de libération.

Selon un mode de réalisation de l'invention, l'organe d'actionnement comporte une partie de préhension, telle qu'une poignée de préhension, qui est manipulable par un utilisateur de manière à déplacer l'organe d'actionnement entre la position de repos et la position de déverrouillage.

Selon un mode de réalisation de l'invention, la partie de préhension est accessible pour un utilisateur uniquement lorsque le couvercle est dans la position ouverte. Ces dispositions permettent d'assurer un démontage sécurisé du dispositif de chauffage, notamment lorsque l'appareil de cuisson électrique est pourvu d'un dispositif de sécurité empêchant une ouverture du couvercle par exemple tant que la température de l'organe de chauffage est supérieure à une valeur de température prédéterminée.

Selon un mode de réalisation de l'invention, l'organe d'actionnement est monté pivotant sur le couvercle autour d'un axe de déplacement.

Selon un mode de réalisation de l'invention, l'organe d'actionnement est un levier d'actionnement.

Selon un mode de réalisation de l'invention, l'appareil de cuisson électrique comporte un logement de retenue qui est prévu sur le couvercle, et le dispositif de chauffage comporte un organe de retenue, tel qu'un doigt de retenue, qui est configuré pour être reçu dans le logement de retenue lorsque le dispositif de chauffage est monté sur le couvercle. Une telle configuration de l'appareil de cuisson électrique assure notamment un pré-positionnement facilité du dispositif de chauffage par rapport au couvercle avant le verrouillage du dispositif de chauffage sur le couvercle.

Selon un mode de réalisation de l'invention, le logement de retenue est situé à l'opposé de l'élément de verrouillage.

Selon un mode de réalisation de l'invention, l'organe de retenue est solidaire de l'élément de fermeture.

Selon un mode de réalisation de l'invention, le dispositif de chauffage est monté mobile par rapport au couvercle entre une position verrouillée dans laquelle le dispositif de chauffage est verrouillé sur le couvercle par le mécanisme de verrouillage, et une position de préhension dans laquelle le dispositif de chauffage est libéré par le mécanisme de verrouillage et est démontable.

Selon un mode de réalisation de l'invention, le dispositif de chauffage est maintenu dans la position de préhension au moins en partie par une coopération de l'organe de retenue avec le logement de retenue.

Selon un mode de réalisation de l'invention, le dispositif de chauffage est configuré pour être déplacé automatiquement de la position verrouillée à la position de préhension lorsque l'élément de verrouillage est déplacé de la position de verrouillage vers la position de libération.

Selon un mode de réalisation de l'invention, l'appareil de cuisson électrique comporte une ouverture de sortie de vapeur et une soupape de sortie de vapeur qui est mobile entre une première position de soupape dans laquelle la soupape de sortie de vapeur libère l'ouverture de sortie de vapeur et met en communication l'intérieur de la cuve de cuisson avec l'extérieur de l'appareil de cuisson électrique de manière à permettre une sortie de vapeur vers l'extérieur de l'appareil de cuisson électrique, et une deuxième position de soupape dans laquelle la soupape de sortie de vapeur obture l'ouverture de sortie de vapeur (et donc isole fluidiquement l'intérieur de la cuve de cuisson de l'extérieur de l'appareil de cuisson électrique) de manière à permettre une montée en pression dans la cuve de cuisson.

Selon un mode de réalisation de l'invention, la soupape de sortie de vapeur est montée sur l'élément de fermeture.

Selon un mode de réalisation de l'invention, l'appareil de cuisson électrique comporte au moins un élément de sollicitation, tel qu'un ressort de sollicitation, qui est configuré pour solliciter la soupape de sortie de vapeur vers la deuxième position de soupape. Avantageusement, l'au moins un élément de sollicitation est prévu sur l'élément de fermeture.

Selon un mode de réalisation de l'invention, l'appareil de cuisson électrique comporte un mécanisme de verrouillage de couvercle configuré pour verrouiller le couvercle dans la position fermée, et un organe de commande configuré pour être manipulé par un utilisateur et pour commander un verrouillage et un déverrouillage du couvercle par rapport au boîtier, l'organe de commande étant monté mobile sur le couvercle et étant configuré pour occuper :
- une première position de commande dans laquelle le couvercle est déverrouillé par rapport au boîtier et le couvercle peut être déplacé dans la position ouverte,
- une deuxième position de commande dans laquelle le couvercle est verrouillé dans la position fermée et la soupape de sortie de vapeur est maintenue dans la première position de soupape, et
- une troisième position de commande dans laquelle le couvercle est verrouillé dans la position fermée et la soupape de sortie de vapeur est maintenue dans la deuxième position de soupape.

Ainsi, l'appareil de cuisson électrique est configuré de telle sorte qu'un déplacement de l'organe de commande de la deuxième position de commande à la troisième position de commande entraîne un déplacement de la soupape de sortie de vapeur de la première position de soupape à la deuxième position de soupape, et de telle sorte qu'un déplacement de l'organe de commande de la troisième position de commande à la deuxième position de commande entraîne un déplacement de la soupape de sortie de vapeur de la deuxième position de soupape à la première position de soupape.

Une telle configuration de l'appareil de cuisson électrique permet, tout simplement en actionnant l'organe de commande, de configurer l'appareil de cuisson électrique pour une cuisson au gril sans pression lorsque l'organe de commande occupe la deuxième position de commande (du fait que la vapeur peut s'évacuer à travers la soupape de sortie de vapeur), ou pour une cuisson sous pression lorsque l'organe de commande occupe la troisième position de commande (du fait que la soupape de sortie de vapeur empêche alors une évacuation de la vapeur vers l'extérieur de l'appareil de cuisson électrique).

De plus, l'organe de commande permet, en une seule action par l'utilisateur, de commander le verrouillage du couvercle et de sélectionner le mode de cuisson de l'appareil de cuisson électrique selon la présente invention, ce qui facilite grandement l'utilisation de l'appareil de cuisson électrique selon la présente invention.

En outre, le fait qu'un même organe assure la sélection du mode de cuisson de l'appareil de cuisson électrique et le verrouillage de son couvercle limite les coûts de fabrication de l'appareil de cuisson électrique, et augmente la fiabilité de ce dernier.

Selon un mode de réalisation de l'invention, l'organe de chauffage est apte à être activé lorsque l'organe de commande occupe la deuxième position de commande.

Selon un mode de réalisation de l'invention, le mécanisme de verrouillage de couvercle comporte un organe de verrouillage de couvercle prévu sur le couvercle et monté mobile entre une position de verrouillage de couvercle dans laquelle l'organe de verrouillage de couvercle coopère avec le boîtier de manière à verrouiller le couvercle dans la position fermée, et une position de libération de couvercle dans laquelle l'organe de verrouillage de couvercle libère le boîtier et autorise un déplacement du couvercle vers la position ouverte.

Selon un mode de réalisation de l'invention, le mécanisme de verrouillage de couvercle comporte un organe d'entraînement configuré pour déplacer l'organe de verrouillage de couvercle de la position de verrouillage de couvercle vers la position de libération de couvercle.

Selon un mode de réalisation de l'invention, l'organe de commande est relié mécaniquement à l'organe d'entraînement. De façon avantageuse, l'organe d'entraînement est solidaire en rotation de l'organe de commande.

Selon un mode de réalisation de l'invention, l'organe de commande est monté rotatif par rapport au couvercle.

Selon un mode de réalisation de l'invention, l'appareil de cuisson électrique comporte un piston de soupape qui est configuré pour déplacer la soupape de sortie de vapeur dans la première position de soupape lorsque l'organe de commande est déplacé dans la deuxième position de commande.

Selon un mode de réalisation de l'invention, le piston de soupape est également configuré pour déplacer la soupape de sortie de vapeur dans la première position de soupape lorsque l'organe de commande est déplacé dans la première position de commande.

Selon un mode de réalisation de l'invention, le piston de soupape est monté sur le couvercle.

Selon un mode de réalisation de l'invention, l'appareil de cuisson électrique comporte un élément de chauffage qui est disposé dans le boîtier et qui est configuré pour chauffer la cuve de cuisson, par exemple au moins par conduction.

Selon un mode de réalisation de l'invention, l'élément de chauffage est apte à être activé lorsque l'organe de commande occupe la troisième position de commande.

Selon un mode de réalisation de l'invention, l'appareil de cuisson électrique comporte un joint d'étanchéité qui est configuré pour être interposé entre le couvercle et le dispositif de chauffage, et plus particulièrement entre le couvercle et l'élément de fermeture.

Selon un mode de réalisation de l'invention, le joint d'étanchéité est configuré pour s'étendre autour de la soupape de sortie de vapeur.

Selon un mode de réalisation de l'invention, le joint d'étanchéité est configuré pour solliciter le dispositif de chauffage vers la position de préhension.

Selon un mode de réalisation de l'invention, l'appareil de cuisson électrique comporte des premiers contacts électriques prévus sur le couvercle et des deuxièmes contacts électriques prévus sur l'élément de fermeture, les premiers contacts électriques étant configurés pour coopérer avec les deuxièmes contacts électriques lorsque le dispositif de chauffage est monté sur le couvercle, et par exemple verrouillé sur le couvercle, de manière à alimenter électriquement l'organe de chauffage.

Selon un mode de réalisation de l'invention, les premiers et deuxièmes contacts électriques sont protégés de la vapeur générée dans la cuve de cuisson par le joint d'étanchéité.

Selon un mode de réalisation de l'invention, l'appareil de cuisson électrique comporte une soupape de régulation de pression qui est configurée pour réguler la pression à l'intérieur de la cuve de cuisson, et en particulier dans l'enceinte de cuisson. La soupape de régulation de pression peut par exemple être une soupape à bille. Avantageusement, la soupape de régulation de pression est montée sur l'élément de fermeture.

Selon un mode de réalisation de l'invention, l'appareil de cuisson électrique comporte une soupape de sécurité qui est configurée pour mettre en communication l'intérieur de la cuve de cuisson, et en particulier l'enceinte de cuisson, avec l'extérieur de l'appareil de cuisson électrique lorsque la pression à l'intérieur de la cuve de cuisson excède une valeur de seuil prédéterminée. Avantageusement, la soupape de sécurité est montée sur l'élément de fermeture.

Selon un mode de réalisation de l'invention, l'appareil de cuisson électrique comporte un capteur de température configuré pour déterminer la température du dispositif de chauffage, et par exemple de l'élément de fermeture.

Selon un mode de réalisation de l'invention, l'appareil de cuisson électrique comporte une pluralité de capteurs de position configurés pour détecter la position occupée par l'organe de commande.

Selon un mode de réalisation de l'invention, l'appareil de cuisson électrique comporte une unité de commande configurée pour commander l'alimentation électrique de l'organe de chauffage lorsque l'organe de commande occupe la deuxième position de commande, et par exemple lorsque la pluralité de capteurs de position a détecté le fait que lorsque l'organe de commande occupe la deuxième position de commande.

Selon un mode de réalisation de l'invention, l'unité de commande est configurée pour commander l'alimentation électrique de l'élément de chauffage lorsque l'organe de commande occupe la troisième position de commande, et par exemple lorsque la pluralité de capteurs de position a détecté le fait que l'organe de commande occupe la troisième position de commande.

Selon un mode de réalisation de l'invention, l'unité de commande est également configurée pour commander l'alimentation électrique de l'organe de chauffage lorsque l'organe de commande occupe la troisième position de commande, par exemple pendant une phase initiale d'un mode de cuisson de l'appareil de cuisson électrique afin de diminuer le temps nécessaire pour mettre en pression la cuve de cuisson.

Selon un mode de réalisation de l'invention, l'appareil de cuisson électrique est un appareil de cuisson sous pression électrique, tel qu'un autocuiseur électrique ou un multi-cuiseur électrique avec pression.

Selon un autre mode de réalisation de l'invention, l'appareil de cuisson électrique est un appareil de cuisson sans pression électrique.

### Brève description des figures

L'invention sera bien comprise à l'aide de la description qui suit en référence aux dessins schématiques annexés représentant, à titre d'exemple non limitatif, une forme d'exécution de cet appareil de cuisson électrique.
La figure 1 est une vue en perspective d'un appareil de cuisson électrique selon la présente invention montrant un couvercle de ce dernier en position fermée.
La figure 2 est une vue partielle en perspective de l'appareil de cuisson électrique de la figure 1 montrant le couvercle en position ouverte.
La figure 3 est une vue partielle en perspective de l'appareil de cuisson électrique de la figure 1 montrant un dispositif de chauffage en position de préhension.
La figure 4 est une vue de côté de l'appareil de cuisson électrique de la figure 1 montrant le dispositif de chauffage en position de préhension.
La figure 5 est une vue partielle de dessus de l'appareil de cuisson électrique de la figure 1 montrant un organe d'actionnement en position de déverrouillage.
La figure 6 est une vue en coupe du couvercle et du dispositif de chauffage en position de préhension.
La figure 7 est une vue en perspective de dessus du dispositif de chauffage.
La figure 8 est une vue en perspective de dessous du dispositif de chauffage.
La figure 9 est une vue partielle en perspective de l'appareil de cuisson électrique de la figure 1 montrant le couvercle en position ouverte et dans laquelle le dispositif de chauffage a été déposé.
La figure 10 est une vue partielle de côté, partiellement tronquée, de l'appareil de cuisson électrique de la figure 1 montrant le dispositif de chauffage en position verrouillée.
La figure 11 est une vue partielle en perspective, partiellement tronquée, de l'appareil de cuisson électrique de la figure 1 montrant le dispositif de chauffage en position verrouillée.
La figure 12 est une vue partielle de côté, partiellement tronquée, de l'appareil de cuisson électrique de la figure 1 montrant le dispositif de chauffage en position de préhension.
La figure 13 est une vue partielle de dessus de l'appareil de cuisson électrique de la figure 1 montrant un organe de commande dans une première position de commande.
La figure 14 est une vue partielle en perspective de l'appareil de cuisson électrique de la figure 1 montrant l'organe de commande dans la première position de commande.
La figure 15 est une vue partielle en perspective, partiellement tronquée, de l'appareil de cuisson électrique de la figure 1 montrant l'organe de commande dans la première position de commande.
La figure 16 est une vue partielle de côté, partiellement tronquée, de l'appareil de cuisson électrique de la figure 1 montrant l'organe de commande dans la première position de commande.
La figure 17 est une vue partielle de dessus de l'appareil de cuisson électrique de la figure 1 montrant l'organe de commande dans une deuxième position de commande.
La figure 18 est une vue partielle en perspective de l'appareil de cuisson électrique de la figure 1 montrant l'organe de commande dans la deuxième position de commande.
La figure 19 est une vue partielle en perspective, partiellement tronquée, de l'appareil de cuisson électrique de la figure 1 montrant l'organe de commande dans la deuxième position de commande.
La figure 20 est une vue partielle de côté, partiellement tronquée, de l'appareil de cuisson électrique de la figure 1 montrant l'organe de commande dans la deuxième position de commande.
La figure 21 est une vue partielle de dessus de l'appareil de cuisson électrique de la figure 1 montrant l'organe de commande dans une troisième position de commande.
La figure 22 est une vue partielle en perspective de l'appareil de cuisson électrique de la figure 1 montrant l'organe de commande dans la troisième position de commande.
La figure 23 est une vue partielle en perspective, partiellement tronquée, de l'appareil de cuisson électrique de la figure 1 montrant l'organe de commande dans la troisième position de commande.
La figure 24 est une vue partielle de côté, partiellement tronquée, de l'appareil de cuisson électrique de la figure 1 montrant l'organe de commande dans la troisième position de commande.

### Description détaillée

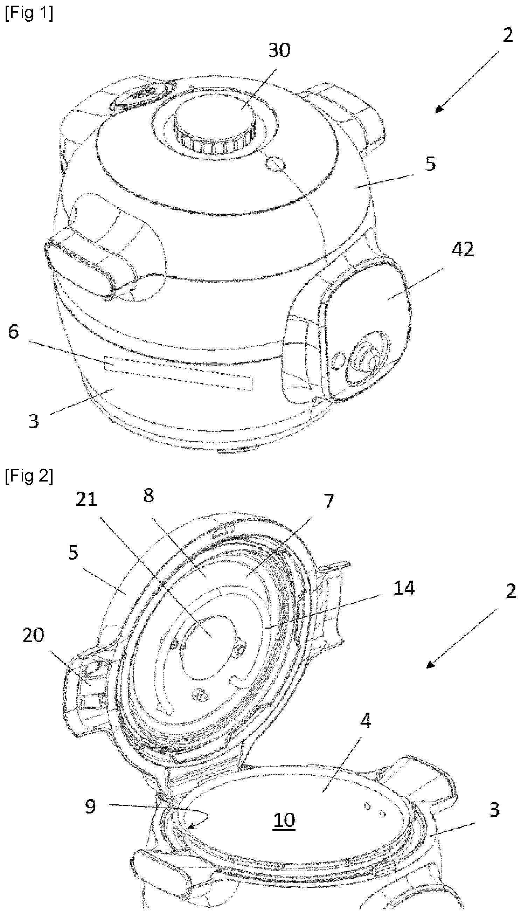

Les figures 1 à 24 représentent un appareil de cuisson électrique 2, et plus particulièrement un appareil de cuisson sous pression électrique, tel qu'un autocuiseur électrique ou un multi-cuiseur électrique avec pression.

Comme montré plus particulièrement sur les figures 1 et 2, l'appareil de cuisson électrique 2 comprend un boîtier 3 comportant une cuve de cuisson 4 configurée pour recevoir des aliments à cuire, et un couvercle 5 monté pivotant sur le boîtier 3 entre une position ouverte (voir la figure 1) dans laquelle le couvercle 5 libère un accès à la cuve de cuisson 4 et une position fermée (voir la figure 2) dans laquelle le couvercle 5 empêche l'accès à la cuve de cuisson 4. Selon le mode de réalisation représenté sur les figures, la cuve de cuisson 4 présente une section transversale sensiblement circulaire. Toutefois, la cuve de cuisson 4 pourrait présenter une section transversale d'une toute autre forme, et par exemple carrée ou rectangulaire.

L'appareil de cuisson électrique 2 comprend en outre un élément de chauffage 6 qui est disposé dans le boîtier 3 et qui est configuré pour chauffer la cuve de cuisson 4 par conduction. L'élément de chauffage 6 peut par exemple être un élément résistif chauffant et s'étendre autour d'au moins une portion d'une paroi latérale de la cuve de cuisson 4.

L'appareil de cuisson électrique 2 comprend également un dispositif de chauffage 7 qui est monté de façon amovible sur une surface intérieure du couvercle 5.

Le dispositif de chauffage 7 comporte un élément de fermeture 8, par exemple métallique, configuré pour fermer de manière étanche une ouverture d'accès 9 de la cuve de cuisson 4 lorsque le couvercle 5 occupe la position fermée. L'élément de fermeture 8 et la cuve de cuisson 4 délimitent ainsi une enceinte de cuisson 10 lorsque le couvercle 5 est dans la position fermée.

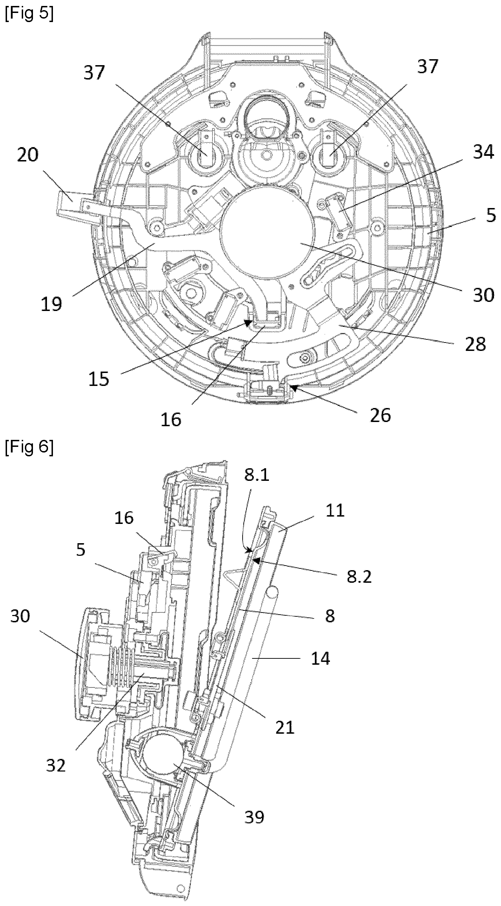

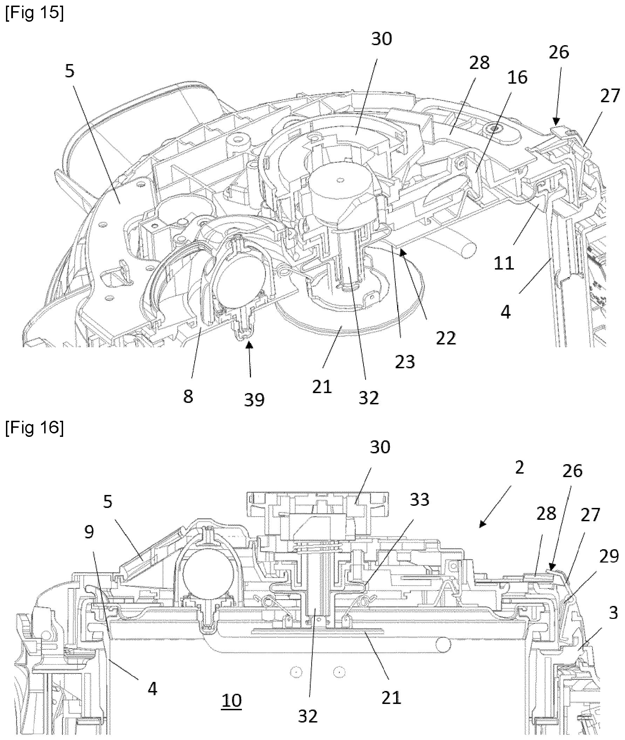

Afin d'assurer une étanchéité entre l'élément de fermeture 8 et la cuve de cuisson 4, le dispositif de chauffage 7 comporte avantageusement un élément d'étanchéité annulaire 11 (voir notamment les figures 6 et 15) qui est fixé à l'élément de fermeture 8 et qui est configuré pour coopérer de manière étanche avec l'ouverture d'accès 9 de la cuve de cuisson 4.

L'élément de fermeture 8 comporte une première surface 8.1 configurée pour être orientée vers le couvercle 5, et une deuxième surface 8.2 configurée pour être orientée vers la cuve de cuisson 4 lorsque le couvercle 5 occupe la position fermée. Selon le mode de réalisation représenté sur les figures, l'élément de fermeture 8 présente une forme globalement circulaire.

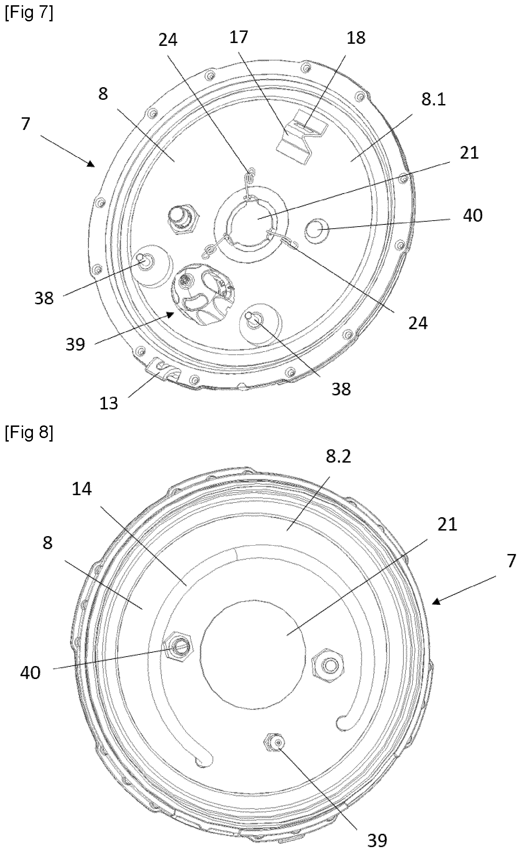

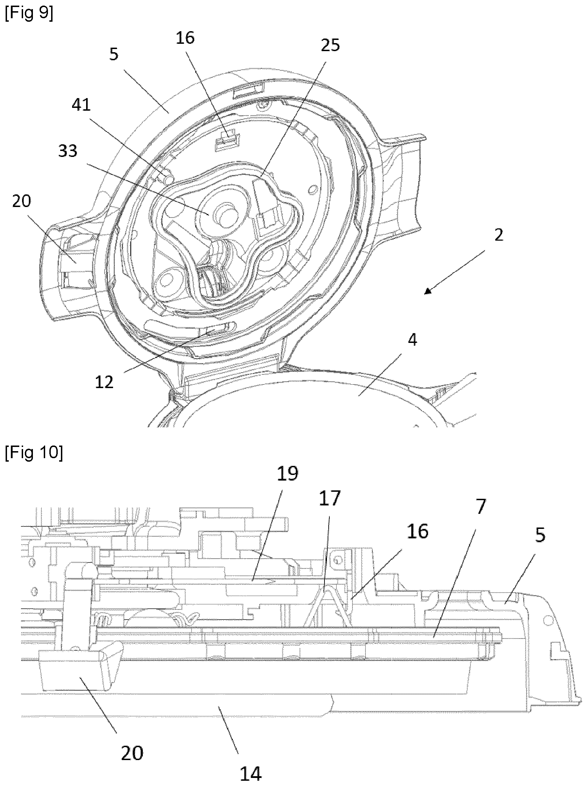

L'appareil de cuisson électrique 2 comporte en outre un logement de retenue 12 (voir la figure 9) qui est prévu sur le couvercle 5, et le dispositif de chauffage 7 comporte un organe de retenue 13 (voir les figures 6 et 7), tel qu'un doigt de retenue, qui est solidaire de l'élément de fermeture 8 et qui est configuré pour être reçu dans le logement de retenue 12 lorsque l'élément de fermeture 8 est monté sur le couvercle 5.

Le dispositif de chauffage 7 comporte de plus un organe de chauffage 14 qui est fixé à l'élément de fermeture 8 et qui s'étend sur la deuxième surface 8.2 de l'élément de fermeture 8. L'organe de chauffage 14 peut par exemple être un élément résistif chauffant, et s'étendre sensiblement en arc de cercle. De façon avantageuse, l'angle au centre de l'arc de cercle défini par l'organe de chauffage 14 est supérieur à 180°, et par exemple supérieur à 220°.

L'organe de chauffage 14 est configuré pour être disposé dans l'enceinte de cuisson 10 et pour être situé en regard des aliments à cuire reçus dans la cuve de cuisson 4 lorsque le couvercle 5 occupe la position fermée. Ainsi, l'organe de chauffage 14 est plus particulièrement configuré pour chauffer par rayonnement et par convection les aliments à cuire reçus dans la cuve de cuisson 4 lorsque le couvercle 5 occupe la position fermée.

L'appareil de cuisson électrique 2 comporte également un mécanisme de verrouillage 15 configuré pour verrouiller le dispositif de chauffage 7 sur le couvercle 5, et plus particulièrement pour verrouiller l'élément de fermeture 8 sur le couvercle 5.

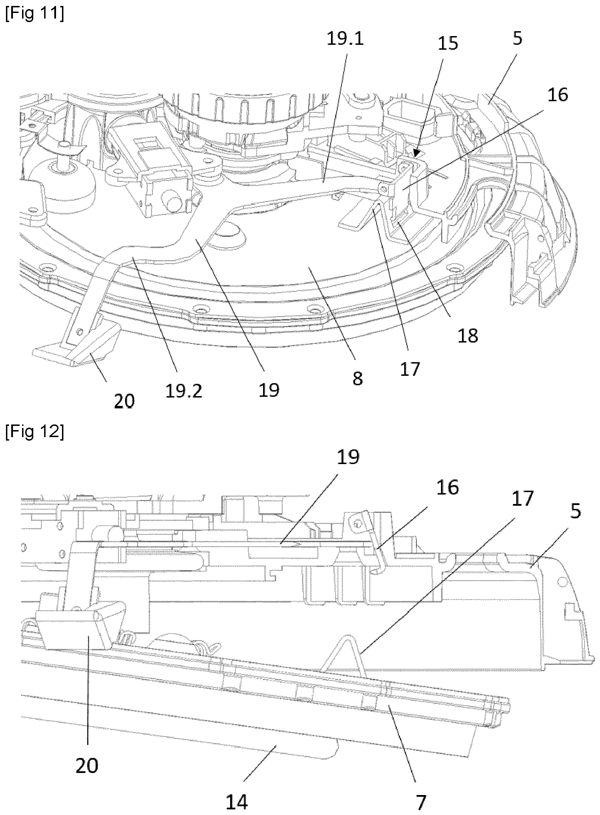

Comme montré plus particulièrement sur les figures 11 et 12, le mécanisme de verrouillage 15 comporte un élément de verrouillage 16, tel qu'un doigt de verrouillage, monté pivotant sur le couvercle 5 autour d'un axe de pivotement et entre une position de verrouillage (voir la figure 11) dans laquelle l'élément de verrouillage 16 coopère avec un organe de verrouillage 17 prévu sur la première surface 8.1 de l'élément de fermeture 8 de manière à verrouiller l'élément de fermeture 8 sur le couvercle 5, et une position de libération (voir la figure 12) dans laquelle l'élément de verrouillage 16 libère l'organe de verrouillage 17 et donc l'élément de fermeture 8 et autorise ainsi un démontage du dispositif de chauffage 7. Selon le mode de réalisation représenté sur les figures, l'organe de verrouillage 17 comporte une ouverture de verrouillage 18 et l'élément de verrouillage 16 est configuré pour s'insérer au moins partiellement dans l'ouverture de verrouillage 18 lorsque l'élément de verrouillage 16 est déplacé dans la position de verrouillage. De façon avantageuse, l'élément de verrouillage 16 est situé à l'opposé du logement de retenue 12, et est par exemple diamétralement opposé au logement de retenue 12.

L'appareil de cuisson électrique 2 comporte avantageusement un organe de sollicitation (non visibles sur les figures), tel qu'un ressort de sollicitation, monté sur le couvercle 5 et configuré pour solliciter l'élément de verrouillage 16 vers la position de verrouillage.

Comme montré notamment sur la figure 5, l'appareil de cuisson électrique 2 comporte en outre un organe d'actionnement 19, tel qu'un levier d'actionnement, configuré pour déplacer l'élément de verrouillage 16 de la position de verrouillage vers la position de libération.

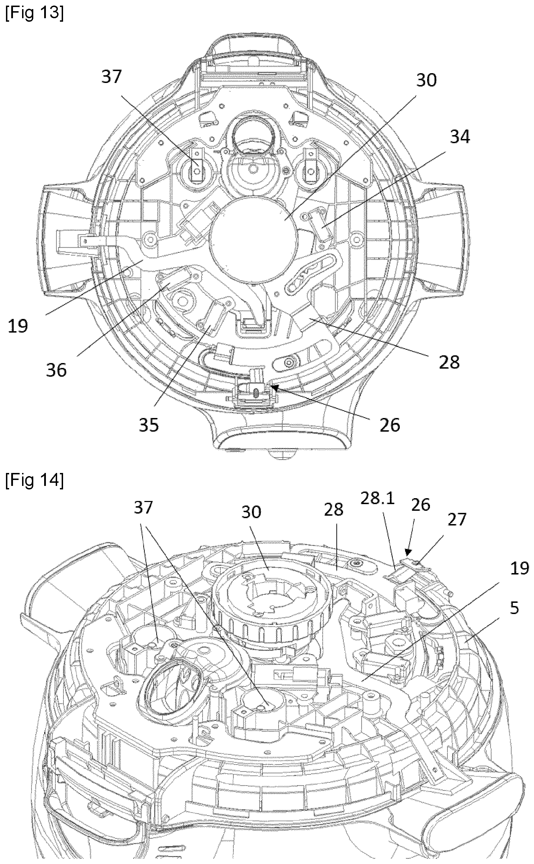

L'organe d'actionnement 19 est monté pivotant sur le couvercle 5 autour d'un axe de déplacement et entre une position de repos (voir les figures 11 et 13) dans laquelle l'élément de verrouillage 16 est dans la position de verrouillage et une position de déverrouillage (voir les figures 5 et 12) dans laquelle l'élément de verrouillage 16 est dans la position de libération, l'organe d'actionnement 19 étant configuré de telle sorte qu'un déplacement de l'organe d'actionnement 19 de la position de repos vers la position de déverrouillage entraîne un déplacement de l'élément de verrouillage 16 de la position de verrouillage vers la position de libération. L'axe de déplacement de l'organe d'actionnement 19 peut par exemple être orthogonal à l'axe de pivotement de l'élément de verrouillage 16. De façon avantageuse, l'organe d'actionnement 19 est configuré pour maintenir l'élément de verrouillage 16 dans la position de libération lorsque l'organe d'actionnement 19 occupe la position de déverrouillage.

Selon le mode de réalisation représenté sur les figures, l'organe d'actionnement 19 comporte un bras d'actionnement 19.1 configuré pour coopérer avec l'élément de verrouillage 16, et un bras de préhension 19.2 comportant une partie de préhension 20, telle qu'une poignée de préhension, qui est manipulable par un utilisateur de manière à déplacer l'organe d'actionnement 19 entre la position de repos et la position de déverrouillage. De façon avantageuse, la partie de préhension 20 est accessible pour un utilisateur uniquement lorsque le couvercle 5 est dans la position ouverte.

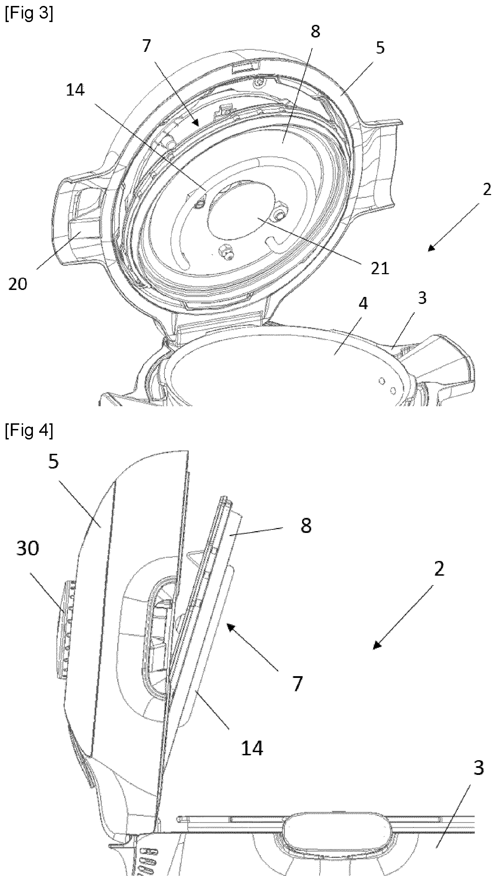

Comme montré plus particulièrement sur les figures 2 et 3, le dispositif de chauffage 7 est monté mobile par rapport au couvercle 5 entre une position verrouillée dans laquelle le dispositif de chauffage 7 est verrouillé sur le couvercle 5 par le mécanisme de verrouillage 15, et une position de préhension dans laquelle le dispositif de chauffage 7 est libéré par le mécanisme de verrouillage 15 et est démontable. De façon avantageuse, un déplacement du dispositif de chauffage 7 entre la position verrouillée et la position de préhension induit un basculement du dispositif de chauffage 7 autour d'un axe de basculement qui est sensiblement parallèle à l'axe de pivotement de l'élément de verrouillage 16 et qui s'étend à proximité de l'organe de retenue 13. Le dispositif de chauffage 7 est avantageusement maintenu dans la position de préhension de manière stable en partie du fait de la coopération de l'organe de retenue 13 avec le logement de retenue 12.

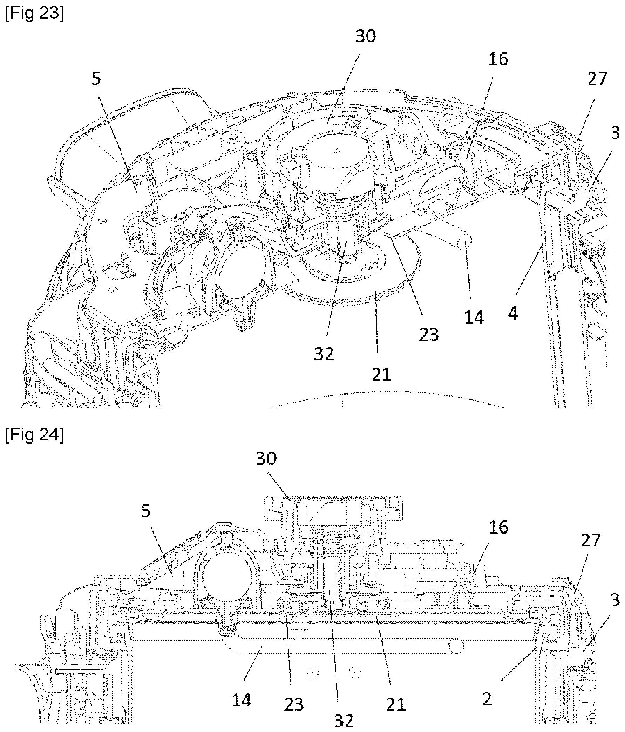

L'appareil de cuisson électrique 2 comporte de plus une soupape de sortie de vapeur 21 qui est montée sur l'élément de fermeture 8 et qui est mobile entre une première position de soupape (voir les figures 15 et 16) dans laquelle la soupape de sortie de vapeur 21 est éloignée d'un siège de soupape 22 s'étendant autour d'une ouverture de sortie de vapeur 23 prévue sur l'élément de fermeture 8 et met en communication l'intérieur de la cuve de cuisson 4 avec l'extérieur de l'appareil de cuisson électrique 2 de manière à permettre une sortie de vapeur vers l'extérieur de l'appareil de cuisson électrique 2, et une deuxième position de soupape (voir les figures 23 et 24) dans laquelle la soupape de sortie de vapeur 21 prend appui de manière étanche sur le siège de soupape 22 et isole fluidiquement l'intérieur de la cuve de cuisson 4 de l'extérieur de l'appareil de cuisson électrique 2 de manière à permettre une montée en pression dans la cuve de cuisson 4. Typiquement, un appareil de cuisson électrique 2 sous pression génère des pressions allant de 40kPa à 100kPa.

De façon avantageuse, l'appareil de cuisson électrique 2 comporte une pluralité d'éléments de sollicitation 24 (voir notamment la figure 7), tel que des ressorts de sollicitation, qui sont configurés pour solliciter la soupape de sortie de vapeur 21 vers la deuxième position de soupape. Avantageusement, les éléments de sollicitation 24 sont prévus sur l'élément de fermeture 8 et sont régulièrement répartis autour de l'ouverture de sortie de vapeur 23.

Comme montré sur la figure 9, l'appareil de cuisson électrique 2 comporte également un joint d'étanchéité 25 qui est monté sur le couvercle 5 et qui est configuré pour être interposé entre le couvercle 5 et l'élément de fermeture 8. Le joint d'étanchéité 25 est configuré pour s'étendre autour de la soupape de sortie de vapeur 21 et pour solliciter le dispositif de chauffage 7 vers la position de préhension.

L'appareil de cuisson électrique 2 comporte en outre un mécanisme de verrouillage de couvercle 26 configuré pour verrouiller le couvercle 5 dans la position fermée.

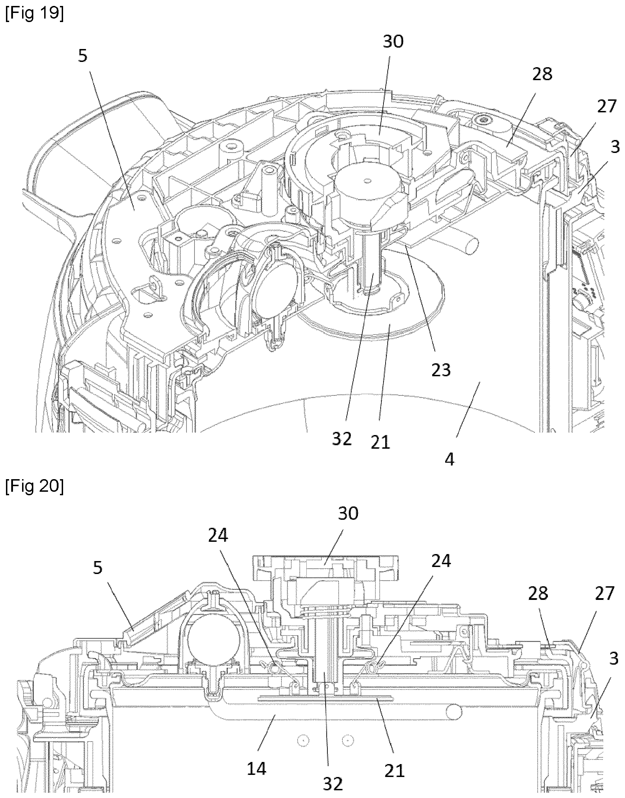

Le mécanisme de verrouillage de couvercle 26 comporte un organe de verrouillage de couvercle 27 prévu sur le couvercle 5 et monté mobile entre une position de verrouillage de couvercle (voir les figures 19 et 20) dans laquelle l'organe de verrouillage de couvercle 27 coopère avec le boîtier 3 de manière à verrouiller le couvercle 5 dans la position fermée, et une position de libération de couvercle (voir les figures 15 et 16) dans laquelle l'organe de verrouillage de couvercle 27 libère le boîtier 3 et autorise un déplacement du couvercle 5 vers la position ouverte.

Comme montré notamment sur les figures 13, 14 et 16, le mécanisme de verrouillage de couvercle 26 comporte en outre un organe d'entraînement 28 configuré pour déplacer l'organe de verrouillage de couvercle 27 de la position de verrouillage de couvercle vers la position de libération de couvercle, et un organe de rappel 29 configuré pour solliciter l'organe de verrouillage de couvercle 27 vers la position de verrouillage de couvercle. Le fonctionnement de l'organe d'entraînement 28 est décrit plus en détail ci-après.

L'appareil de cuisson électrique 2 comporte également un organe de commande 30 qui est relié mécaniquement à l'organe d'entraînement 28 et qui est configuré pour être manipulé par un utilisateur et pour commander un verrouillage et un déverrouillage du couvercle 5 par rapport au boîtier 3.

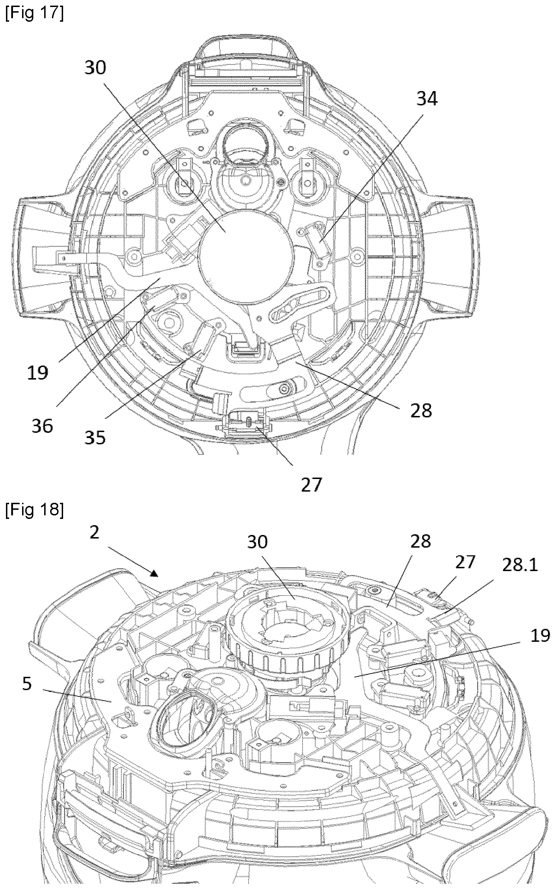

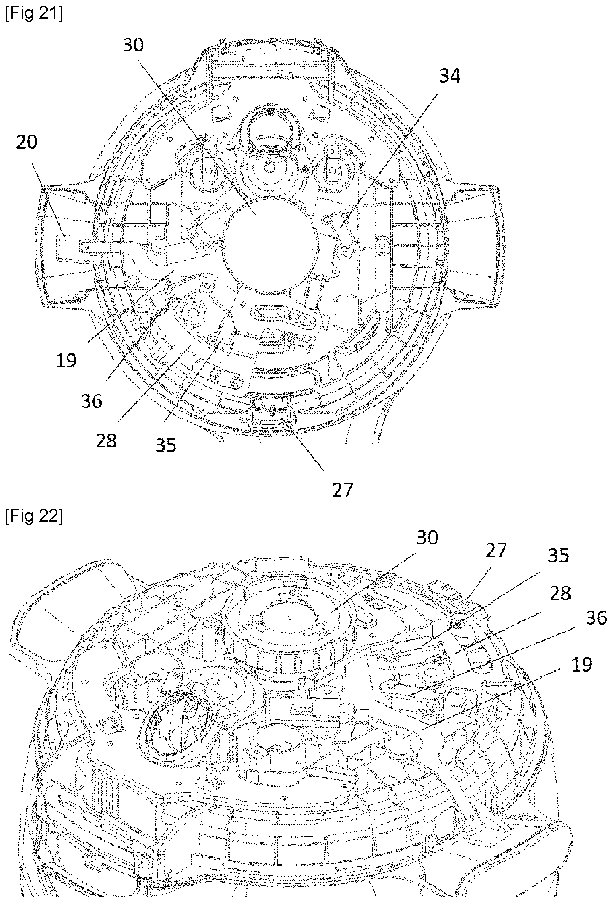

L'organe de commande 30 est monté mobile en rotation sur le couvercle 5 et est configuré pour occuper :
- une première position de commande (voir les figures 13 à 16) dans laquelle le couvercle 5 est déverrouillé par rapport au boîtier 3 et le couvercle 5 peut être déplacé dans la position ouverte,
- une deuxième position de commande (voir les figures 17 à 20), également nommée position gril, dans laquelle le couvercle 5 est verrouillé dans la position fermée, la soupape de sortie de vapeur 21 est maintenue dans la première position de soupape et l'organe de chauffage est apte à être activé, et
- une troisième position de commande (voir les figures 21 à 24), également nommée position sous pression, dans laquelle le couvercle 5 est verrouillé dans la position fermée, la soupape de sortie de vapeur 21 est maintenue dans la deuxième position de soupape et l'élément de chauffage 6 est apte à être activé.

Ainsi, l'appareil de cuisson électrique 2 est configuré de telle sorte qu'un déplacement de l'organe de commande 30 de la deuxième position de commande à la troisième position de commande entraîne un déplacement de la soupape de sortie de vapeur 21 de la première position de soupape à la deuxième position de soupape, et de telle sorte qu'un déplacement de l'organe de commande 30 de la troisième position de commande à la deuxième position de commande entraîne un déplacement de la soupape de sortie de vapeur 21 de la deuxième position de soupape à la première position de soupape.

Selon le mode de réalisation représenté sur les figures, l'organe d'entraînement 28 est solidaire en rotation de l'organe de commande 30 et est configuré pour occuper une première position angulaire (voir notamment la figure 13) dans laquelle l'organe de commande 30 occupe la première position de commande et l'organe d'entraînement 28 immobilise l'organe de verrouillage de couvercle 27 dans la position de libération de couvercle, une deuxième position angulaire (voir notamment la figure 17) dans laquelle l'organe de commande 30 occupe la deuxième position de commande et l'organe d'entraînement 28 ne coopère pas avec l'organe de verrouillage de couvercle 27, et une troisième position angulaire (voir notamment la figure 21) dans laquelle l'organe de commande 30 occupe la troisième position de commande et l'organe d'entraînement 28 est éloigné de l'organe de verrouillage de couvercle 27, les première, deuxième et troisième positions angulaires étant décalées angulairement les unes des autres.

De façon avantageuse, l'organe d'entraînement 28 comporte une rampe inclinée 28.1 (voir notamment la figure 14) configurée pour soulever une partie arrière de l'organe de verrouillage de couvercle 27 et pour faire pivoter ce dernier dans la position de libération de couvercle, lorsque l'organe d'entraînement 28 est déplacé de la deuxième position angulaire vers la première position angulaire.

L'appareil de cuisson électrique 2 comporte de plus un piston de soupape 32 qui est monté sur le couvercle 5 et qui est relié mécaniquement à l'organe de commande 30, par exemple par un ensemble de doigts et de cames à pentes variables prévus respectivement sur l'organe de commande 30 et le piston de soupape 32.

Le piston de soupape 32 s'étend sensiblement parallèlement à l'axe de rotation de l'organe de commande 30 et est monté mobile par rapport au couvercle 5 entre une première position de piston (voir la figure 16) correspondant à la première position de soupape, et une deuxième position de piston (voir la figure 24) correspondant à la deuxième position de soupape. Le piston de soupape 32 est avantageusement configuré pour occuper la première position de piston lorsque l'organe de commande 30 occupe les première et deuxième positions de commande, et pour occuper la deuxième position de piston lorsque l'organe de commande 30 occupe la troisième position de commande.

Le piston de soupape 32 est plus particulièrement configuré pour déplacer la soupape de sortie de vapeur 21 dans la première position de soupape (à l'encontre de la force de sollicitation exercée par les éléments de sollicitation 24 sur la soupape de sortie de vapeur 21) lorsque l'organe de commande 30 est déplacé dans la première position de commande et dans la deuxième position de commande, et pour autoriser un déplacement de la soupape de sortie de vapeur 21 (du fait de la force de sollicitation exercée par les éléments de sollicitation 24 sur la soupape de sortie de vapeur 21) dans la deuxième position de soupape lorsque l'organe de commande 30 est déplacé dans la troisième position de commande.

De façon avantageuse, le piston de soupape 32 peut être au moins partiellement recouvert par un soufflet de soupape 33 de telle sorte que le soufflet de soupape 33 soit interposé entre le piston de soupape 32 et la soupape de sortie de vapeur 21, et ce afin de protéger notamment de l'humidité le piston de soupape 32 et l'organe de commande 30.

L'appareil de cuisson électrique 2 comporte de plus une pluralité de capteurs de position configurés pour détecter la position occupée par l'organe de commande 30. L'appareil de cuisson électrique 2 peut par exemple comporter un premier capteur de position 34 configuré pour détecter que l'organe de commande 30 occupe la première position de commande, un deuxième capteur de position 35 configuré pour détecter que l'organe de commande 30 occupe la deuxième position de commande et un troisième capteur de position 36 configuré pour détecter que l'organe de commande 30 occupe la troisième position de commande.

Selon un mode de réalisation de l'invention, le premier capteur de position 34 est configuré pour être activé par l'organe d'entraînement 28 lorsque l'organe d'entraînement 28 est déplacé dans la première position angulaire, le deuxième capteur de position 35 est configuré pour être activé par l'organe d'entraînement 28 lorsque l'organe d'entraînement 28 est déplacé dans la deuxième position angulaire, et le troisième capteur de position 36 est configuré pour être activé par l'organe d'entraînement 28 lorsque l'organe d'entraînement 28 est déplacé dans la troisième position angulaire.

L'appareil de cuisson électrique 2 comporte de plus des premiers contacts électriques 37 (voir la figure 5) prévus sur le couvercle 5 et des deuxièmes contacts électriques 38 (voir la figure 7) prévus sur l'élément de fermeture 8. Les premiers contacts électriques 37 sont configurés pour coopérer avec les deuxièmes contacts électriques 38 lorsque l'élément de fermeture 8 est verrouillé sur le couvercle 5, et ce de manière à assurer une alimentation électrique de l'organe de chauffage 14.

Selon le mode de réalisation représenté sur les figures, les premiers et deuxièmes contacts électriques 37, 38 sont protégés de la vapeur générée dans la cuve de cuisson 4 par le joint d'étanchéité 25.

De façon avantageuse, l'appareil de cuisson électrique 2 comporte une soupape de régulation de pression 39 (voir les figures 7 et 8) qui est montée sur l'élément de fermeture 8 et qui est configurée pour réguler la pression à l'intérieur de la cuve de cuisson 4, et en particulier dans l'enceinte de cuisson 10. La soupape de régulation de pression 39 peut par exemple être une soupape à bille.

L'appareil de cuisson électrique 2 peut en outre comporter une soupape de sécurité 40 (voir les figures 7 et 8) qui est montée sur l'élément de fermeture 8 et qui est configurée pour mettre en communication l'intérieur de la cuve de cuisson 4, et en particulier l'enceinte de cuisson 10, avec l'extérieur de l'appareil de cuisson électrique 2 lorsque la pression à l'intérieur de la cuve de cuisson 4 excède une valeur de seuil prédéterminée.

L'appareil de cuisson électrique 2 peut de plus comporter également un capteur de température 41 (voir la figure 9) configuré pour déterminer la température du dispositif de chauffage 7, et par exemple de l'élément de fermeture 8.

L'appareil de cuisson électrique 2 en outre comporte une unité de commande 42 configurée pour commander l'alimentation électrique de l'élément de chauffage 6 et de l'organe de chauffage 14 en fonction notamment de la position occupée par l'organe de commande 30.

L'unité de commande 42 est plus particulièrement configurée pour commander l'alimentation électrique de l'organe de chauffage 14 lorsque l'organe de commande 30 occupe la deuxième position de commande, et donc lorsque le deuxième capteur de position 35 a détecté le fait que l'organe de commande 30 occupe la deuxième position de commande. Toutefois, l'unité de commande 42 pourrait également être configurée pour commander l'alimentation électrique de l'organe de chauffage 14 lorsque l'organe de commande 30 occupe la troisième position de commande, par exemple pendant une phase initiale d'un mode de cuisson avec pression de l'appareil de cuisson électrique 2, et ce afin de diminuer le temps nécessaire pour mettre en pression la cuve de cuisson 4.

L'unité de commande 42 peut par exemple être configurée pour commander l'alimentation électrique de l'élément de chauffage 6 uniquement lorsque l'organe de commande 30 occupe la troisième position de commande, et donc lorsque le troisième capteur de position 36 a détecté le fait que l'organe de commande 30 occupe la troisième position de commande.

L'unité de commande 42 peut en outre comporter, de façon connue, des boutons et/ou écran permettant à un utilisateur de sélectionner un mode de cuisson. Par exemple, l'utilisateur peut sélectionner une durée et la température de cuisson ou choisir parmi des programmes de cuisson préenregistrés.

Par ailleurs, l'unité de commande 42 est configurée pour activer ou désactiver l'élément de chauffage 6 et l'organe de chauffage 14 en fonction d'une part d'un programme de cuisson choisi par l'utilisateur et d'autre part des mesures de température relevées par le capteur de température 41 et un éventuel capteur de température additionnel associé à l'élément de chauffage 6.

Ainsi, l'appareil de cuisson électrique 2 selon la présente invention permet, tout simplement en actionnant l'organe de commande 30, de configurer l'appareil de cuisson électrique 2 pour une cuisson au gril sans pression lorsque l'organe de commande 30 occupe la deuxième position de commande (du fait que la vapeur peut s'évacuer à travers la soupape de sortie de vapeur 21), ou pour une cuisson sous pression lorsque l'organe de commande 30 occupe la troisième position de commande (du fait que la soupape de sortie de vapeur 21 empêche alors une évacuation de la vapeur vers l'extérieur de l'appareil de cuisson électrique).

De plus, le fait que le dispositif de chauffage 7 soit démontable permet de faciliter grandement le nettoyage de l'appareil de cuisson électrique 2 selon la présente invention.

Bien entendu, la présente invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention. C'est ainsi notamment que l'appareil de cuisson électrique pourrait être un appareil de cuisson sans pression électrique.

## Revendications

1. Appareil de cuisson électrique (2) comprenant :
- un boîtier (3) comportant une cuve de cuisson (4) configurée pour recevoir des aliments à cuire, et
- un couvercle (5) monté pivotant sur le boîtier (3) entre une position ouverte dans laquelle le couvercle (5) libère un accès à la cuve de cuisson (4) et une position fermée dans laquelle le couvercle (5) empêche l'accès à la cuve de cuisson (4),
l'appareil de cuisson électrique (2) comprenant en outre un dispositif de chauffage (7) qui est monté sur une surface intérieure du couvercle (5), le dispositif de chauffage (7) comportant un organe de chauffage (14) configuré pour être situé en regard des aliments à cuire reçus dans la cuve de cuisson (4) et pour chauffer lesdits aliments à cuire lorsque le couvercle (5) occupe la position fermée,
ledit appareil de cuisson électrique étant **caractérisé en ce que** le dispositif de chauffage (7) est monté de façon amovible sur la surface intérieure du couvercle (5).

2. Appareil de cuisson électrique (2) selon la revendication 1, dans lequel le dispositif de chauffage (7) comporte un élément de fermeture (8) configuré pour fermer au moins partiellement une ouverture d'accès (9) de la cuve de cuisson (4) lorsque le couvercle (5) occupe la position fermée, l'organe de chauffage (14) étant fixé à l'élément de fermeture (8).

3. Appareil de cuisson électrique (2) selon la revendication 2, dans lequel l'élément de fermeture (8) et la cuve de cuisson (4) délimitent une enceinte de cuisson (10) lorsque le couvercle (5) est dans la position fermée, l'organe de chauffage (14) étant configuré pour être disposé dans l'enceinte de cuisson (10).

4. Appareil de cuisson électrique (2) selon la revendication 2 ou 3, dans lequel l'élément de fermeture (8) est configuré pour fermer de manière étanche l'ouverture d'accès (9) de la cuve de cuisson (4) lorsque le couvercle (5) occupe la position fermée.

5. Appareil de cuisson électrique (2) selon l'une quelconque des revendications 1 à 4, lequel comporte un mécanisme de verrouillage (15) configuré pour verrouiller le dispositif de chauffage (7) sur le couvercle (5).

6. Appareil de cuisson électrique (2) selon la revendication 5, dans lequel le mécanisme de verrouillage (15) comporte un élément de verrouillage (16) prévu sur le couvercle (5) et monté mobile entre une position de verrouillage dans laquelle l'élément de verrouillage (16) coopère avec le dispositif de chauffage (7) de manière à verrouiller le dispositif de chauffage (7) sur le couvercle (5), et une position de libération dans laquelle l'élément de verrouillage (16) libère le dispositif de chauffage (7) et autorise un démontage du dispositif de chauffage (7).

7. Appareil de cuisson électrique (2) selon la revendication 6, lequel comporte un organe d'actionnement (19) configuré pour déplacer l'élément de verrouillage (16) de la position de verrouillage vers la position de libération.

8. Appareil de cuisson électrique (2) selon la revendication 7, dans lequel l'organe d'actionnement (19) est monté mobile sur le couvercle (5) entre une position de repos dans laquelle l'élément de verrouillage (16) est dans la position de verrouillage et une position de déverrouillage dans laquelle l'élément de verrouillage (16) est dans la position de libération, l'organe d'actionnement (19) étant configuré de telle sorte qu'un déplacement de l'organe d'actionnement (19) de la position de repos vers la position de déverrouillage entraîne un déplacement de l'élément de verrouillage (16) de la position de verrouillage vers la position de libération.

9. Appareil de cuisson électrique (2) selon la revendication 8, dans lequel l'organe d'actionnement (19) comporte une partie de préhension (20) qui est manipulable par un utilisateur de manière à déplacer l'organe d'actionnement (19) entre la position de repos et la position de déverrouillage.

10. Appareil de cuisson électrique (2) selon la revendication 9, dans lequel la partie de préhension (20) est accessible pour un utilisateur uniquement lorsque le couvercle (5) est dans la position ouverte.

11. Appareil de cuisson électrique (2) selon l'une quelconque des revendications 5 à 10, dans lequel le dispositif de chauffage (7) est monté mobile par rapport au couvercle (5) entre une position verrouillée dans laquelle le dispositif de chauffage (7) est verrouillé sur le couvercle (5) par le mécanisme de verrouillage (15), et une position de préhension dans laquelle le dispositif de chauffage (7) est libéré par le mécanisme de verrouillage (15) et est démontable.

12. Appareil de cuisson électrique (2) selon la revendication 11 en combinaison avec la revendication 6, dans lequel le dispositif de chauffage (7) est configuré pour être déplacé automatiquement de la position verrouillée à la position de préhension lorsque l'élément de verrouillage (16) est déplacé de la position de verrouillage vers la position de libération.

13. Appareil de cuisson électrique (2) selon l'une quelconque des revendications 1 à 12, lequel comporte une soupape de sortie de vapeur (21) qui est mobile entre une première position de soupape dans laquelle la soupape de sortie de vapeur (21) met en communication l'intérieur de la cuve de cuisson (4) avec l'extérieur de l'appareil de cuisson électrique (2) de manière à permettre une sortie de vapeur vers l'extérieur de l'appareil de cuisson électrique (2), et une deuxième position de soupape dans laquelle la soupape de sortie de vapeur (21) isole fluidiquement l'intérieur de la cuve de cuisson (4) de l'extérieur de l'appareil de cuisson électrique (2) de manière à permettre une montée en pression dans la cuve de cuisson (4).

14. Appareil de cuisson électrique (2) selon la revendication 13, lequel comporte au moins un élément de sollicitation (24) qui est configuré pour solliciter la soupape de sortie de vapeur (21) vers la deuxième position de soupape.

15. Appareil de cuisson électrique (2) selon la revendication 13 ou 14, lequel comporte un mécanisme de verrouillage de couvercle (26) configuré pour verrouiller le couvercle (5) dans la position fermée, et un organe de commande (30) configuré pour être manipulé par un utilisateur et pour commander un verrouillage et un déverrouillage du couvercle (5) par rapport au boîtier (3), l'organe de commande (30) étant monté mobile sur le couvercle (5) et étant configuré pour occuper :
- une première position de commande dans laquelle le couvercle (5) est déverrouillé par rapport au boîtier (3) et le couvercle (5) peut être déplacé dans la position ouverte,
- une deuxième position de commande dans laquelle le couvercle (5) est verrouillé dans la position fermée et la soupape de sortie de vapeur (21) est maintenue dans la première position de soupape, et
- une troisième position de commande dans laquelle le couvercle (5) est verrouillé dans la position fermée et la soupape de sortie de vapeur (21) est maintenue dans la deuxième position de soupape.

16. Appareil de cuisson électrique (2) selon la revendication 15, lequel comporte un piston de soupape (32) qui est configuré pour déplacer la soupape de sortie de vapeur (21) dans la première position de soupape lorsque l'organe de commande (30) est déplacé dans la deuxième position de commande.

17. Appareil de cuisson électrique (2) selon l'une quelconque des revendications 1 à 16, lequel comporte un élément de chauffage (6) qui est disposé dans le boîtier (3) et qui est configuré pour chauffer la cuve de cuisson (4).

18. Appareil de cuisson électrique (2) selon l'une quelconque des revendications 1 à 17, dans lequel l'appareil de cuisson électrique (2) est un appareil de cuisson sous pression électrique.
